(19) Europäisches Patentamt
European Patent Office
Office européen des brevets

(11) EP 4 768 876 A1

(12) EUROPEAN PATENT APPLICATION

(43) Date of publication:
01.07.2026 Bulletin 2026/27

(21) Application number: 25223100.6

(22) Date of filing: 12.12.2025

(51) International Patent Classification (IPC):
G01J 3/28 (2006.01)     G01J 3/36 (2006.01)
G01J 3/453 (2006.01)

(52) Cooperative Patent Classification (CPC):
G01J 3/36; G01J 3/2823; G01J 3/4535;
G01J 2003/1213; G01J 2003/2826

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 16.12.2024 US 202463734354 P
25.11.2025 US 202519400988

(71) Applicant: ABB SCHWEIZ AG
5400 Baden (CH)

(72) Inventor: VILLEMAIRE, Andre
Quebec, G1W 1M2 (CA)

(74) Representative: Maiwald GmbH
Elisenhof
Elisenstraße 3
80335 München (DE)

(54) MULTI-BAND IMAGING SPECTROMETER

(57) A system includes a detector and at least one optical component that directs light toward the detector. The system also includes a spatially varying spectral filter that is positioned in the optical train and that has at least two bandpass zones: a first bandpass zone that passes light of a first wavelength range and a second bandpass zone that passes light of a second wavelength range that is different from the first wavelength range. The system also includes a circuit configured to perform a first transform operation on light of the first wavelength detected by the detector and to perform a second transform operation on light of the second wavelength detected by the detector.

240

244

Radiometric References

242          246          248          250          252

Scene → FORE Optics → INT → AFT Optics → SW/MW /LW DET

FIG. 2B

EP 4 768 876 A1

**Description**

**CROSS-REFERENCE TO RELATED APPLICATION**

This application claims priority to U.S. Provisional Application No. 63/734,354, filed on 16 Dec. 2024, the disclosure of which is incorporated, in its entirety, herein.

**SUM MARY**

In some aspects, the techniques described herein relate to a system including: a detector positioned at an end of an optical path; a set of optical components positioned along the optical path such that the set of optical components directs light of a scene to the detector, the set of optical components including an interferometer configured to create a set of interferograms; a spatially varying spectral filter positioned along the optical path and configured to cause different regions of the detector to be exposed to different spectral bands of the light originating from the scene; and a processor communicatively coupled to the detector and configured to process the set of interferograms as detected by the detector in a manner that extracts spectral information from the set of interferograms.

In some aspects, the techniques described herein relate to a method of manufacturing a multi-band imaging spectrometer device, the method including: coupling a detector to circuitry, the circuitry configured to process interferograms generated by the detector; assembling an interferometer in optical communication with the detector, the interferometer configured to direct modulated light to the detector; mounting a spatially varying spectral filter in proximity to the detector and the interferometer, the filter being adapted to expose different regions of the detector to different spectral bands of the modulated light; arranging a set of optical components, including the interferometer and the spatially varying spectral filter, such that light from a scene passes through the interferometer and the filter before reaching the detector.

In some aspects, the techniques described herein relate to a system including: a spectrometer including: a detector positioned at an end of an optical path, a set of optical components positioned along the optical path such that the set of optical components directs light of a scene to the detector, the set of optical components including an interferometer configured to create a set of interferograms, a spatially varying spectral filter positioned along the optical path and configured to cause different regions of the detector to be exposed to different spectral bands of the light originating from the scene, and a processor communicatively coupled to the detector and configured to process the set of interferograms as detected by the detector in a manner that extracts spectral information from the set of interferograms; and a mounting interface configured to attach the spectrometer to a remote sensing platform.

Features from any of the embodiments described herein may be used in combination with one another in accordance with the general principles described herein. These and other embodiments, features, and advantages will be more fully understood upon reading the following detailed description in conjunction with the accompanying drawings and claims.

**BRIEF DESCRIPTION OF THE DRAWINGS**

The accompanying drawings illustrate a number of exemplary embodiments and are a part of the specification. Together with the following description, these drawings demonstrate and explain various principles of the present disclosure.

FIG. 1A shows the spectral distribution of the quantum efficiency of a detector.
FIG. 1B shows an example of a multispectral imaging system.
FIG. 2A shows a block diagram of a traditional solution having three optics and detectors.
FIG. 2B shows a block diagram of an embodiment of this disclosure with the detectors combined in one optical branch.
FIG. 3 shows examples of locations where a filter may be positioned according to embodiments of this disclosure.
FIG. 4 shows blackbody radiation for a body at 20C.
FIG. 5 shows a measurement of a ground feature using embodiments disclosed herein.
FIG. 6 shows a method for manufacturing a multispectral imaging system according to embodiments disclosed herein.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

**DETAILED DESCRIPTION OF EXEM PLARY EM BODIM ENTS**

The present disclosure relates to multi-band imaging spectrometer systems, and more particularly to systems and methods that enable the simultaneous acquisition of multiple spectral bands using a single detector. Traditional imaging device architectures often involve separate optical chains and detectors for each spectral band, resulting in increased complexity, size, and cost. The disclosed embodiments may address such complexities by employing a spatially varying spectral filter in combination with an interferometer, enabling different regions of a single detector to be exposed to distinct spectral bands. This approach streamlines the optical design, reduces hardware requirements, and enhances the efficiency and practicality of multi-band spectral imaging for applications such as remote sensing, atmospheric monitoring, and Earth observation from airborne platforms, spaceborne platforms, and/or ground-based platforms.

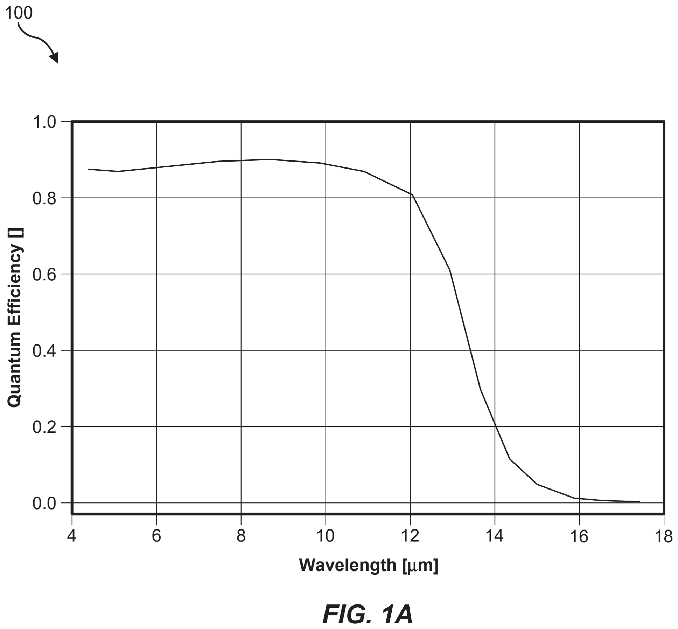

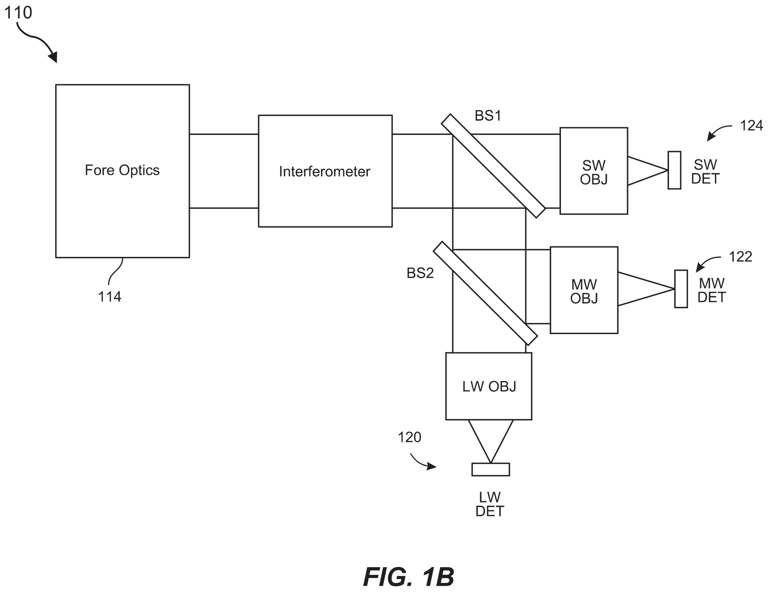

Photon detectors respond starting at their specific cutoff wavelength and typically extend towards shorter wavelength, as illustrated in FIG. 1A by the quantum efficiency graph 100 for an example Long-Wave Infrared (LWIR) detector with a 13.5 $\mu$m cutoff. One example of a multi-band imaging spectrometer that uses such detectors is a Fourier transform spectrometer. Fourier transform spectrometer instruments may break up the overall instrument bandwidth in multiple bands because specific detectors only respond in specific spectral ranges, as shown in FIG. 1B. In some cases, they break up the overall instrument bandwidth into separate bands to reduce the number of photons seen in each band therefore reducing the measured noise associated with detected photons (shot noise). This is typically done by introducing dichroic beamsplitters (BS1 and BS2 in FIG. 1B) in the optical assemblies, as shown in optical train 110 in FIG. 1B, enabling the system to direct selected wavelengths to separate optical assemblies dedicated to these wavelengths.

As shown in FIG. 1B, the Fore optics 114 collect light from a scene, for example the reflected and emitted radiation from Earth. This light is then directed into an interferometer, which modulates the collected light. The light is then passed through a beamsplitter BS1 that divide it into distinct spectral bands, where the reflected portion is collected at a LWIR detector 120 (LW DET) and a Mid-Wave Infrared (MWIR) (MW DET) detector 122 (via a second beamsplitter BS2), while the transmitted portion is collected at a Short-Wave Infrared (SWIR) detector 124 (SW DET). In this example, each of the separated spectral band light is focused on their respective imaging detectors (DET) by a set of objectives (OBJ). FIG. 1B is an example of the type of complexity that may be involved in an architecture with different optical paths and detectors.

Embodiments of this disclosure may be directed to the field of commercial space instruments, such as weather sounding using IR. Such an application may involve measurement of the IRlight in the 4-15 $\mu$m range with a high signal-to-noise SNR. Traditional sounders break up this spectral range in three bands and have three detector chains. These bands are usually referred to as short-wave (SW), mid-wave (MW), and long-wave (LW). For example, the SW, MW and LW bands could span the spectral ranges 4-5.6 micrometers ($\mu$m), 5.6 - 8.7 $\mu$m, or 8.7 - 14 $\mu$m, but other ranges can also be used.

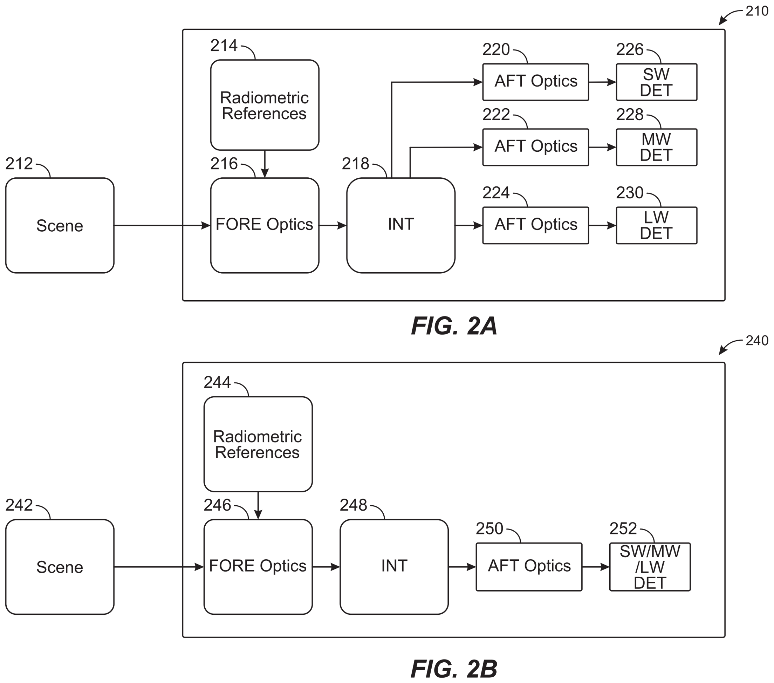

An example of such an instrument is shown in FIG. 2A as multispectral imager 210, in which light from a scene 212 first enters the fore optics 216, which are responsible for collecting and collimating of the incoming light. The fore optics 216 may also be coupled to a radiometric reference 214, which provides a known calibration signal to ensure the accuracy and reliability of the spectrometer measurements. After passing through the fore optics, the light proceeds to the interferometer 218. The interferometer 218 modulates the light by creating an optical path difference, encoding the spectral information into an interferogram.

Following modulation by the interferometer, the light is split into three distinct optical paths, each corresponding to a different spectral band. These paths are managed by three sets of aft optics: aft optics 220, aft optics 222, and aft optics 224. Each set of aft optics is designed to focus and direct the modulated light to a specific detector optimized for a particular spectral range. Aft optics 220 directs light to the short-wave detector 226, aft optics 222 directs light to the medium-wave detector 228, and aft optics 224 directs light to the long-wave detector 230. This configuration enables the system to simultaneously capture and analyze spectral information across short-wave, medium-wave, and long-wave bands, but suffers from complexity, expense, and weight due to the multiple optical paths.

FIG. 2B shows an example of a multispectral imager 240 configured according to embodiments of this disclosure. In FIG. 2B, the multispectral imager 240 operates by first receiving light from a scene 242. This light is collected and collimated by the fore optics 246, which serve to direct the incoming radiation along the optical path. The fore optics 246 may also be coupled to radiometric references 244, which provide known calibration signals to ensure the accuracy and reliability of the instrument measurements. After passing through the fore optics, the light enters the interferometer 248. The interferometer 248 modulates the light by introducing an optical path difference, thereby encoding the spectral information into an interferogram.

Once the light has been modulated by the interferometer, it is directed through a set of aft optics 250. The aft optics 250 focus and relay the modulated light onto a broadband detector 252. Unlike traditional systems that split the light into multiple paths for separate detectors, this configuration allows the broadband detector 252 to simultaneously receive and record spectral information across a wide range of wavelengths. The result is a streamlined system that captures comprehensive multispectral data using a single optical chain and detector, simplifying the instrument's design and reducing hardware complexity.

Embodiments of this disclosure provide a potential solution using one detection chain to cover two bands, three bands, or more than three bands. Embodiments of this disclosure can be implemented in ground systems, satellite systems, systems carried by aircraft, or in any other suitable type or form of system.

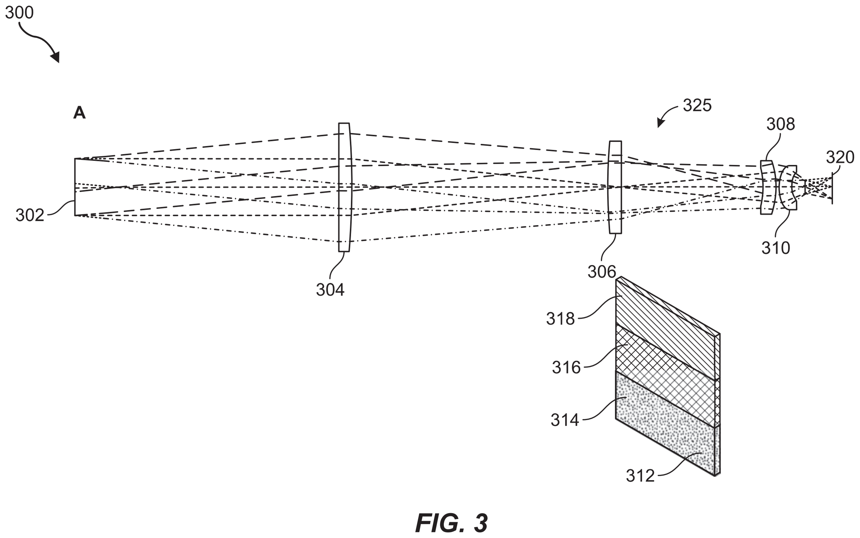

Some embodiments of this disclosure combine imaging Fourier transform spectroscopy (FTS) with a spatially varying spectral filter positioned at an intermediary image plane. FIG. 3 shows an example of Aft optics 300 for such a configuration, in which light passes from a pupil 302 through optical components 304, 306, 308, and 310 to generate an image on detector 320. An example spatially varying spectral filter 312 features three bandpass zones, shortwave 314, midwave 316, and longwave 318. By placing the spatially varying spectral filter at position 325, spectral filtering occurs in the beam of light that is reimaged on the detector, resulting in three detector sections where only one of the bands is incident.

The spatially varying spectral filter can be placed in other locations on or near an image plane in the optical path. For example, the filter can be placed near the detector, or at any other location that enables it to perform spectral filtering.

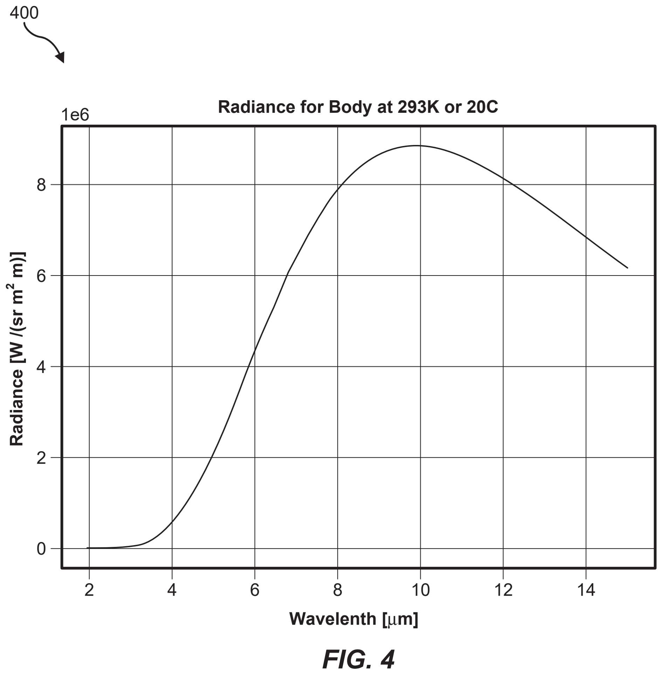

In some examples, embodiments described herein provide better noise performance than traditional systems, especially in the shorter wave bands where otherwise useless long wave photons would be flooding the detector and generating noise and degrade the performance. This is particularly true for close to room temperature bodies that emit a lot more radiance at longer wavelengths, as seen in graph 400 of FIG. 4.

Some embodiments can be combined with an image motion compensation mechanism to capture a scene for a longer time, such as when a craft to which the instrument is mounted advances, whether it is a spacecraft or an aircraft.

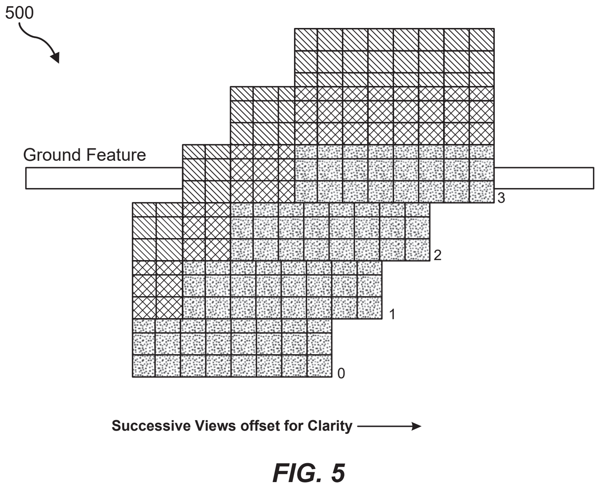

FIG. 5 illustrates a scenario where a craft advances vertically towards the top of the image and where the successive views are offset laterally to the right for clarity in the illustration. A feature on the ground can be captured spatially and spectrally in the three bands of interest *(SW,* MW and LW) in views 1, 2 and 3 respectively. The complete spatial and spectral information can be stitched back in post-processing starting for views 1, 2 and 3 measurements.

The figure of merit of a Fourier Transform spectroradiometer (or any spectroradiometer) representing its sensitivity can be expressed as its <u>noise-equivalent spectral radiance</u> $NESR(\sigma)$ $\left[ \frac{W}{sr\ cm^2 cm^{-1}} \right]$, defined so that the signal-to-noise ratio (SNR) of a measurement is given as:

$$NESR(\sigma) \overset{\text{def}}{=} \frac{L(\sigma)}{SNR(\sigma)}, \quad so\ that \quad SNR(\sigma) = \frac{L(\sigma)}{NESR(\sigma)} \qquad \textbf{\{Equation 1\}}$$

where $L(\sigma)$ $\left[ \frac{W}{sr\ cm^2 cm^{-1}} \right]$ is the spectral radiance of the source being measured by the spectroradiometer and,

$\sigma = \frac{1}{\lambda}\ [cm^{-1}]$ is the wavenumber of the light, i.e. the multiplicative inverse of the wavelength $\lambda$. Wavenumber is akin to a frequency and is a more natural scale than wavelength for Fourier Transform spectrometers.

The lower the NESR, the more sensitive a spectroradiometer is because the lower radiance signal it is able to detect. The NESRcan also be seen as the expected statistical variation or standard deviation of successive measurements performed by the instrument, in units of radiance. The NESR is calculated using Equation 2.

$$NESR(\sigma) = \frac{NEP(\sigma)}{\epsilon(\sigma)\ \Theta\ \Delta\sigma\ \sqrt{t}} \qquad \textbf{\{Equation 2\}}$$

where $NEP(\sigma)$ $\left[ \frac{W}{\sqrt{Hz}} \right]$ is the noise-equivalent spectral power of the photodetector used in the spectroradiometer, its units indicated in the square brackets, $\epsilon(\sigma)$ [] is the efficiency of the spectroradiometer (see Equation 4) or its capacity to sense the incident light. $\epsilon(\sigma)$ ranges from 0 to 1, where 1 is perfect efficiency, $\Theta$ [sr cm$^2$] is the optical etendue of the spectroradiometer or its capacity to admit and use the radiance of the source, $\Delta\sigma$ [cm$^{-1}$] is the spectral resolution of the spectroradiometer, representing the spectral width of the bins it separates light into, t *[s]* is the observation time of the measurement.

The noise-equivalent power (NEP) is a measure of the sensitivity of a photodetector. High-performance detectors may be photodetectors, such as photon detectors. In a perfect photon detector, one photon generates one electrical charge that can be processed and accounted for by an electrical circuit. A perfect photon detector would feature a unitary quantum efficiency (i.e. one electron generated for each incident photon regardless of its wavelength). A realistic detector features a quantum efficiency lower than 1, as illustrated in the example provided FIG. 1A. Furthermore, realistic photon detectors exhibit a cutoff, where the detector is no longer able to detect photons and generate electrons at wavelengths longer than this transition. This is also illustrated in the example provided FIG. 1A for wavelengths longer than ~16 μm.

The capacity of a photon detector to convert photon to charges varies with wavelength (and wavenumber) and can also be represented by the responsivity $\mathcal{R}(\sigma)$, as number of electrical charges created per units of energy of the incident photons, in units of $\left[\frac{A}{W}\right]$ or $\left[\frac{C/s}{J/s}\right]$.

The noise-equivalent power (NEP) is defined as the signal power that gives a signal-to-noise ratio of one in a one hertz output bandwidth. Noise-equivalent power (NEP) can be written as:

$$NEP(\sigma) = \frac{I_N(\sigma)}{\mathcal{R}(\sigma)} = \frac{\sqrt{I_{pn}^2 + [I_e(\sigma)]^2}}{\mathcal{R}(\sigma)} \qquad \{\textbf{Equation 3}\}$$

where $I_N(\sigma)$ $\left[\frac{A}{\sqrt{Hz}}\right]$ represents the current noise in the photodetector as well as the equivalent current noise caused by the electrical circuit after the photodetector, $\mathcal{R}(\sigma)$ $\left[\frac{A}{W}\right]$ is the responsivity of the photodetector, $I_{pn}$ $\left[\frac{A}{\sqrt{Hz}}\right]$ is the photon noise. Because of the particle nature of light, statistical noise (shot noise) is present in any beam of light. This noise is equal to $I_{pn} = \sqrt{2\,q\,I_p}$, where $I_p$ [A] is the total photocurrent. $I_e(\sigma)$ $\left[\frac{A}{\sqrt{Hz}}\right]$ is the current-equivalent electronics noise. One can convert the noise from the electronic circuits in units of $\left[\frac{V}{\sqrt{Hz}}\right]$, located after the photodetector by dividing this voltage noise by the electrical gain in units of $\left[\frac{V}{A}\right]$.

The efficiency of the spectroradiometer is given by

$$\epsilon(\sigma) = \tau(\sigma)\,M(\sigma) \qquad \{\textbf{Equation 4}\}$$

where $\tau(\sigma)$ [] is the global transmittance of the spectroradiometer, representing how much light is not reflected or scattered by the optical elements in the spectroradiometer and, $M(\sigma)$ is the modulation efficiency of the Fourier transform spectroradiometer (interferometer), i.e. its ability to modulate the light at wavenumber σ.

An example of improving noise performance of a given spectroradiometer is to increase or maximize the denominator in Equation 2. Some embodiments may involve increasing or maximizing the spectroradiometer efficiency ε (σ) and etendue Θ, for example by improving the quality and size of the optical components used in the instrument. The spectral resolution Δσ is different because some embodiments may not allow increasing Δσ beyond a certain value that is necessary to measure the phenomenon under observation. For example, we may need a spectral resolution better than 1 cm-1 to be able to resolve two spectral absorption lines caused by chemical agents, assuming this is the objective of the spectrometric system. Increasing Δσ beyond this value can improve the SNR of the spectra collected but would reduce our capacity to distinguish the important features of interest. Finally, the observation time will be pushed to the maximum, but it is usually limited to a specific value, such as the time interval available in a natural cycle of the phenomenon under observation or set by the temporal resolution required by the experiment of interest.

Beyond these improvements, some embodiments may also involve reducing or minimizing the numerator in Equation 2 to reduce the noise equivalent power (NEP) in order to minimize the instrument noise equivalent spectral radiance (NESR). According to Equation 3, this can be done by utilizing electronics with low electronic noise $I_e(\sigma)$. Because the total noise of the system is a root sum of square, there is an electronic noise level beyond which its contribution can be considered negligible. When this is achieved, we say that the instrument is "photon noise limited," which is to say it is dominated by $I_{pn}$. This happens when the electronics noise is 3-5 times lower than the photon noise and thus the electronics are only 4-11% of the total noise according to Equation 3.

When an instrument is "photon-noise limited", one improvement to the system may be achieved by increasing its photon-collection capability, such as by opening the instrument aperture or field of view, which increase the optical etendue Θ. Increasing the etendue increases the signal measured but also increases the photon noise associated. However, since the signal increases directly proportional to the etendue and the photon noise $I_{pn}$ increases with the square root of the etendue, this action still yields a net gain in SNR. Increasing the optical etendue Θ comes at a large cost, because several elements in the instrument need to scale up, for example the diameter of lenses.

Fourier transform spectrometers are called "multiplex" instruments, meaning that they do not disperse or reject light, as opposed to a diffraction grating or prism or a bandpass filter. Instead, all of the light admitted in the Fourier transform spectrometer is directed on its photodetector. A Fourier transform spectrometer is able to resolve light of different wavelengths by modulating the light, thus time encoding the spectral information. Each wavelength in a Fourier transform spectrometer is affected by a cosinusoidal modulation whose frequency is inversely proportional to its wavelength. A simple Fourier transform of the native Fourier transform spectrometer signal directly yields the spectrum of the analyzed light. A characteristic of a Fourier transform spectrometer is that on average, all the light is impinging on its photodetector.

This highlights another improvement that can be achieved to improve the SNRof a Fourier transform spectroradiometer. Reducing the bandwidth of light impinging on a spectroradiometer photodetector, as enabled by the systems and methods described herein, may improve the SNR for the light contained inside of the spectral bandpass. This reduction of bandwidth has the effect to reduce the photocurrent $I_p$ and thus also photon noise $I_{pn}$, thus reducing the NEP. While doing so, some embodiments may involve not measuring the spectral regions outside of the reduced bandwidth. So instead of purely reducing the bandwidth, some embodiments may split a given bandwidth into a certain number of bands, using separate photodetectors and optical chains leading to these separated bands as described before and illustrated in FIG. 1B. Each of the bands may then have a reduced photon noise while preserving a good signal response within the band. The final spectrum of such an instrument can be reconstructed by stitching the partial spectra of each band.

In some examples, a system includes a detector and at least one optical component that directs light toward the detector. Any suitable detector and optical configuration may be used (e.g., the configuration shown in FIG. 3 may be used). The system also includes a spatially varying spectral filter that is positioned at or near any image plane in the optical system and that has at least two bandpass zones: a first bandpass zone that passes light of a first wavelength range and a second bandpass zone that passes light of a second wavelength range that is different from the first wavelength range. These wavelength ranges can be any suitable wavelengths. The system may also include a circuit configured to perform a first transform operation on light of the first wavelength detected by the detector and to perform a second transform operation on light of the second wavelength detected by the detector. The circuit can include an integrated circuit, an application specific integrated circuit, a mixed-signal circuit, an accelerator circuit, and/or any other suitable type or form of processing device.

In some examples, the circuit may be a processor that is configured to combine both spatial and spectral information collected from different regions of the detector. Because the spatially varying spectral filter exposes different areas of the detector to distinct spectral bands, the processor can integrate this data to create a single, comprehensive image that contains multi-band spectral information. This composite image allows users to analyze features across multiple wavelengths in a unified format, enhancing the system's utility for remote sensing and scientific analysis.

In some examples, the circuit can be a processor that is configured to process the data collected by the detector by performing a Fourier transform on each interferogram. As the system operates, the interferometer generates a set of interferograms-one for each region or pixel of the detector. By applying a Fourier transform to each interferogram, the processor converts the raw data into detailed spectral profiles for every region of the detector. This enables high-resolution multi-band spectral analysis, providing users with rich spectral information for each part of the observed scene.

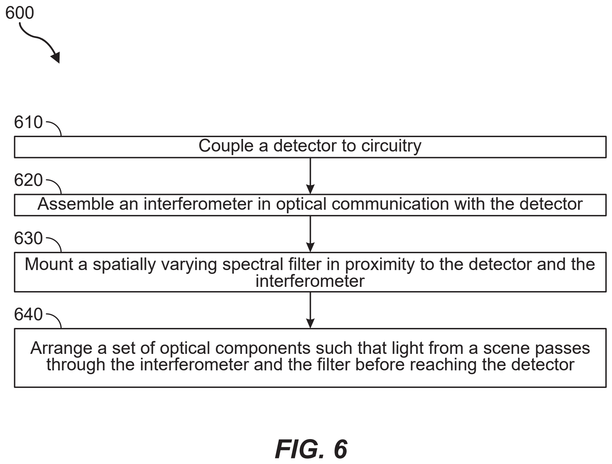

FIG. 6 illustrates an exemplary method of manufacturing a multi-band imaging spectrometer system. Step 610 involves coupling a detector to the multi-spectral imager, a process that can be accomplished in a variety of ways depending on the specific application, instrument architecture, and desired spectral performance. The detector may be physically mounted to the optical bench of the imager using mechanical fasteners, vibration-damping mounts, or precision alignment fixtures to ensure optimal positioning at the focal plane. In some embodiments, the detector may be integrated into a modular cartridge or housing that allows for easy replacement or upgrade, or it may be thermally coupled to a cooling system-such as a thermoelectric cooler, a cryogenic dewar or a Stirling cooler-to maintain stable operating temperatures and reduce thermal noise.

The types of detectors suitable for use in a multi-spectral imager are numerous and can be selected based on the target spectral bands and sensitivity requirements. For example, the detector may be a mercury cadmium telluride (MCT) focal plane array for infrared imaging, a silicon-based charge-coupled device (CCD) or complementary metal-oxide-semiconductor (CMOS) array for visible and near-infrared wavelengths, or an indium gallium arsenide (InGaAs) array for short-wave infrared detection. The detector may be sensitive to a broad range of wavelengths, such as 0.4-1.0 $\mu$m for visible-near infrared light, 1.0-2.5 $\mu$m for short-wave infrared, 3-5 $\mu$m for mid-wave infrared, or 8-14 $\mu$m for long-wave infrared. In some cases, the detector may be a hybrid array capable of simultaneously detecting multiple spectral regions, or it may be segmented into zones, each optimized for a particular wavelength range.

The detector is electrically coupled to associated circuitry, which may include preamplifiers, analog-to-digital converters, and signal processing modules. This circuitry can be further coupled to a computer system, either locally or remotely, for advanced data analysis, calibration, and image reconstruction. The computer system may execute algorithms for spectral unmixing, feature extraction, atmospheric correction, or machine learning-based classification, enabling the multi-spectral imager to deliver actionable information for applications such as weather sounding, remote sensing, environmental monitoring, agricultural assessment, or defense surveillance. The flexible coupling of the detector and circuitry to a computer system ensures that the multi-spectral imager can be tailored to a wide range of operational scenarios and scientific objectives.

Step 620 involves assembling an interferometer into the multispectral imager such that it is in optical communication with the detector. This process begins by selecting an appropriate interferometer design, such as a Michelson interferometer, a Mach-Zehnder interferometer, or a Sagnac interferometer, depending on the desired spectral resolution, wavelength range, and system architecture. The interferometer is typically composed of a beam splitter, one or more mirrors (with at least one movable to introduce a variable optical path difference), and supporting mechanical structures for precise alignment and stability.

To couple the interferometer into the multispectral imager, the interferometer is positioned along the optical path between the fore optics and the detector. The beam splitter is aligned to receive collimated or focused light from the fore optics, dividing the incoming beam into two or more paths. Mirrors are mounted on precision translation or rotation stages and/or actuators, allowing controlled movement to modulate the optical path difference and generate interferograms. The recombined light exits the interferometer and is directed toward the detector, either directly or through additional optical elements such as relay lenses or spatially varying spectral filters.

Mechanical coupling of the interferometer to the imager can be achieved using rigid mounting brackets, vibration isolation platforms, or kinematic mounts to ensure stable alignment and minimize environmental disturbances. Optical coupling may involve the use of alignment lasers, fiducial markers, or active feedback systems to maintain optimal optical throughput and minimize losses. In some embodiments, the interferometer may be integrated into a modular optical bench, allowing for easy installation, removal, or replacement as needed.

For example, a Michelson interferometer can be assembled by mounting a beam splitter at a 45-degree angle to the incoming light, with two mirrors positioned at orthogonal arms-one fixed and one movable. The movable mirror can be actuated by a piezoelectric or motorized stage, enabling precise control of the optical path difference. The recombined light is then focused onto the detector, ensuring that the interferometer is in direct optical communication with the detector and capable of modulating the light for spectral analysis. Alternatively, a Mach-Zehnder interferometer may be constructed using two beam splitters and two mirrors, with the output directed to the detector through relay optics. Careful alignment and coupling may ensure that the interferometer operates efficiently within the multispectral imager and delivers high-quality interferograms to the detector for subsequent processing.

Step 630 involves mounting the spatially varying spectral filter in proximity to both the detector and the interferometer. The spatially varying spectral filter is designed with multiple bandpass zones, each zone selectively transmitting a specific range of wavelengths. This configuration allows the filter to spatially divide the incoming light so that each region of the detector receives only the spectral band assigned to that zone.

The filter can be mounted in several ways, depending on the instrument architecture and the desired optical performance. One common approach is to position the filter at an intermediary image plane between the interferometer and the detector. In this configuration, the filter is held in a precision filter holder or frame, which may be attached to the optical bench or integrated into the housing of the detector assembly. The filter holder can include alignment features such as dowel pins, slots, or adjustable mounts to ensure that the filter is accurately positioned relative to the detector pixels and the optical axis. In some designs, the filter may be mounted directly onto the detector package, using adhesive, mechanical clips, or a custom bracket that secures the filter in place while minimizing optical losses and stray light.

Alternatively, the filter can be mounted immediately adjacent to the detector, such as on the surface of the detector window or within a thin gap between the detector and the final lens of the aft optics. This approach may be useful for compact instruments or when the filter needs to be easily replaceable or interchangeable. In some cases, the filter may be integrated into a cartridge or cassette that slides into a slot near the detector, allowing for rapid swapping of filters to accommodate different measurement requirements or spectral bands.

In another embodiment, the optical filters can be manufactured directly on the detector surface, removing the need for additional optical or physical components to be added to the optical train.

The spatially varying spectral filter itself can take many forms. For example, it may be fabricated as a patterned thin-film filter on an infrared transparent substrate, with each zone deposited using techniques such as sputtering, evaporation, or photolithography to achieve the desired bandpass characteristics. The filter may also be constructed as a mosaic of discrete filter tiles, each tile corresponding to a different spectral band and arranged in a grid or stripe pattern to match the detector layout. In advanced designs, the filter may be a microfabricated array of bandpass elements, such as dielectric stacks or interference coatings, precisely engineered to provide sharp spectral transitions and high transmission within each zone.

As noted, the spatially varying spectral filter can be engineered to include any number of bandpass zones, each designed to transmit a specific range of wavelengths to a corresponding region of the detector. In its simplest form, the filter may have two bandpass zones, such as one zone transmitting shorter wave infrared and another transmitting longer wave infrared. These zones can be arranged as adjacent stripes, tiles, or other patterns that match the geometry of the detector array, ensuring that each region of the detector receives only the light within its designated spectral band.

In some examples, as noted above, the spatially varying spectral filter is placed at an intermediary image plane located between the interferometer and the detector. An intermediary image plane is a location within the optical path where an image of the observed scene is formed by the optical components before it reaches the detector. By positioning the spectral filter at this plane, the system ensures that the filter can selectively transmit different spectral bands to distinct regions of the detector, based on the spatial arrangement of the filter's bandpass zones. Placing the filter between the interferometer and the detector allows the modulated light-containing encoded spectral information from the interferometer-to be divided into separate spectral bands just before detection. This configuration is advantageous because it enables efficient multi-band imaging and spectral separation while maintaining the integrity of the spatial and spectral information collected by the system.

Another advantage when placing the filter between the interferometer and the detector is that light reflected from the environment around the filter, labelled straylight, and reaching the detector is not modulated by the interferometer and consequently is automatically ignored after demodulation (Fourier transform). This means that changes in this straylight caused for example by temperature change in lenses and mechanical parts around the filter does not cause a change in the recorded signal, conferring a higher degree of radiometric accuracy of the instrument.

As described above, embodiments of this disclosure can be designed to be adaptable for use on either a spaceborne platform (such as a satellite or spacecraft), an airborne platform (such as an airplane, drone, or balloon), or a ground-based platform. Additionally, the system is configured for remote sensing applications, meaning it is intended to collect data about the environment from a distance. Specifically, the system can be used to sense and analyze either the atmosphere (for example, measuring gases, temperature, or humidity) or the surface of the Earth (such as mapping land features, vegetation, or water bodies).

In summary, the disclosed multi-band imaging spectrometer system offers a significant advancement in remote sensing technology by enabling simultaneous acquisition of multiple spectral bands using a single detector and a spatially varying spectral filter. By streamlining the optical design and reducing hardware complexity, the invention provides a versatile and efficient solution for a wide range of applications, including atmospheric monitoring, Earth observation, and environmental analysis from airborne or spaceborne platforms. The integration of advanced data processing capabilities further enhances the system's ability to deliver high-resolution, multi-band spectral information, supporting more accurate and comprehensive scientific and operational insights.

Clause 1. Asystem comprising: a detector positioned at an end of an optical path; a set of optical components positioned along the optical path such that the set of optical components directs light of a scene to the detector, the set of optical components comprising an interferometer configured to create a set of interferograms; a spatially varying spectral filter positioned along the optical path and configured to cause different regions of the detector to be exposed to different spectral bands of the light originating from the scene; and a processor communicatively coupled to the detector and configured to process the set of interferograms as detected by the detector in a manner that extracts spectral information from the set of interferograms.

Clause 2. The system of clause 1, wherein the spatially varying spectral filter comprises at least two bandpass zones, each configured to transmit a different spectral band to a corresponding region of the detector.

Clause 3. The system of clauses 1-2, wherein the spatially varying spectral filter is positioned at an intermediary image plane between the interferometer and the detector.

Clause 4. The system of clauses 1-3, wherein the spatially varying spectral filter is positioned at an intermediary image plane before the interferometer.

Clause 5. The system of clauses 1-4, wherein the spatially varying spectral filter is placed directly on a surface of the detector.

Clause 6. The system of clauses 1-5, wherein the set of optical components further comprises fore optics configured to direct at least a portion of the light from a scene through the interferometer.

Clause 7. The system of clauses 1-6, wherein the spatially varying spectral filter comprises a short-wave infrared bandpass zone, a mid-wave infrared bandpass zone, and a long-wave infrared bandpass zone.

Clause 8. The system of clauses 1-7, wherein the system is configured: to be coupled to at least one of a spaceborne platform or an airborne platform; and for remote sensing of at least one of an atmosphere or a surface of Earth.

Clause 9. The system of clauses 1-8, wherein the processor is further configured to stitch together spatial and spectral information from the different regions of the detector to generate a composite multi-band spectral image.

Clause 10. The system of clauses 1-9, wherein the processor is configured to process the set of interferograms by performing a Fourier transform on each interferogram in the set of interferograms.

Clause 11. A method of manufacturing a multi-band imaging spectrometer device, the method comprising: coupling a detector to circuitry, the circuitry configured to process interferograms generated by the detector; assembling an interferometer in optical communication with the detector, the interferometer configured to direct modulated light to the detector; mounting a spatially varying spectral filter in proximity to the detector and the interferometer, the filter being adapted to expose different regions of the detector to different spectral bands of the modulated light; arranging a set of optical components, including the interferometer and the spatially varying spectral filter, such that light from a scene passes through the interferometer and the filter before reaching the detector.

Clause 12. The method of clause 11, wherein configuring the circuitry to process interferograms comprises configuring the circuitry to perform a Fourier transform on each interferogram generated by the detector, thereby extracting spectral information for each region of the detector.

Clause 13. The method of clauses 11-12, further comprising configuring the spatially varying spectral filter to include at least two bandpass zones, each configured to transmit a different spectral band.

Clause 14. The method of clauses 11-13, wherein arranging the set of optical components comprises positioning the spatially varying spectral filter at an intermediary image plane between the interferometer and the detector.

Clause 15. The method of clauses 11-14, further comprising positioning the spatially varying spectral filter at an intermediary image plane before the interferometer.

Clause 16. A system comprising: a spectrometer comprising: a detector positioned at an end of an optical path, a set of optical components positioned along the optical path such that the set of optical components directs light of a scene to the detector, the set of optical components comprising an interferometer configured to create a set of interferograms, a spatially varying spectral filter positioned along the optical path and configured to cause different regions of the detector to be exposed to different spectral bands of the light originating from the scene, and a processor communicatively coupled to the detector and configured to process the set of interferograms as detected by the detector in a manner that extracts spectral information from the set of interferograms; and a mounting interface configured to attach the spectrometer to a remote sensing platform.

Clause 17. The system of clause 16, wherein the remote sensing platform comprises a spaceborne platform.

Clause 18. The system of clauses 16-17, wherein the spectrometer is configured for remote sensing of an atmosphere of Earth.

Clause 19. The system of clauses 16-18, wherein the remote sensing platform comprises an airborne platform.

Clause 20. The system of clauses 16-19, wherein the spectrometer is configured for remote sensing of a surface of Earth.

While the foregoing disclosure sets forth various embodiments using specific block diagrams, flowcharts, and examples, each block diagram component, flowchart step, operation, and/or component described and/or illustrated herein may be implemented, individually and/or collectively, using a wide range of hardware, software, or firmware (or any combination thereof) configurations. In addition, any disclosure of components contained within other components should be considered exemplary in nature since many other architectures can be implemented to achieve the same functionality.

The process parameters and sequence of the steps described and/or illustrated herein are given by way of example only and can be varied asdesired. For example, while the steps illustrated and/or described herein may be shown or discussed in a particular order, these steps do not necessarily need to be performed in the order illustrated or discussed. The various exemplary methods described and/or illustrated herein may also omit one or more of the stepsdescribed or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms"a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

**Claims**

1. A system comprising:

   a detector positioned at an end of an optical path;
   a set of optical components positioned along the optical path such that the set of optical components directs light of a scene to the detector, the set of optical components comprising an interferometer configured to create a set of interferograms;
   a spatially varying spectral filter positioned along the optical path and configured to cause different regions of the detector to be exposed to different spectral bands of the light originating from the scene; and

a processor communicatively coupled to the detector and configured to process the set of interferograms as detected by the detector in a manner that extracts spectral information from the set of interferograms.

2. The system of claim 1, wherein the spatially varying spectral filter comprises at least two bandpass zones, each configured to transmit a different spectral band to a corresponding region of the detector.

3. The system of claim 1 or 2, wherein the spatially varying spectral filter is positioned at an intermediary image plane between the interferometer and the detector.

4. The system of one of the preceding claims, wherein the spatially varying spectral filter is positioned at an intermediary image plane before the interferometer.

5. The system of one of the preceding claims, wherein the spatially varying spectral filter is located on a surface of the detector.

6. The system of one of the preceding claims, wherein the set of optical components further comprises fore optics configured to direct at least a portion of the light from a scene through the interferometer.

7. The system of one of the preceding claims, wherein the spatially varying spectral filter comprises a short-wave infrared bandpass zone, a mid-wave infrared bandpass zone, and a long-wave infrared bandpass zone.

8. The system of one of the preceding claims, wherein the system is configured:

   to be coupled to at least one of a spaceborne platform or an airborne platform; and
   for remote sensing of at least one of an atmosphere or a surface of Earth.

9. The system of claim 8, wherein the processor is further configured to stitch together spatial and spectral information from the different regions of the detector to generate a composite multi-band spectral image.

10. The system of claim 8 or 9, wherein the processor is configured to process the set of interferograms by performing a Fourier transform on each interferogram in the set of interferograms.

11. A method of manufacturing a multi-band imaging spectrometer device, the method comprising:

   coupling a detector to circuitry, the circuitry configured to process interferograms generated by the detector;
   assembling an interferometer in optical communication with the detector, the interferometer configured to direct modulated light to the detector;
   mounting a spatially varying spectral filter in proximity to the detector and the interferometer, the filter being adapted to expose different regions of the detector to different spectral bands of the modulated light; and
   arranging a set of optical components such that light from a scene passes through the interferometer and the filter before reaching the detector.

12. The method of claim 11, wherein configuring the circuitry to process interferograms comprises configuring the circuitry to perform a Fourier transform on each interferogram generated by the detector, thereby extracting spectral information for each region of the detector.

13. The method of claim 11 or 12, further comprising configuring the spatially varying spectral filter to include at least two bandpass zones, each configured to transmit a different spectral band.

14. The method of one of claims 11 to 13, wherein arranging the set of optical components comprises positioning the spatially varying spectral filter at an intermediary image plane between the interferometer and the detector.

15. The method of one of claims 11 to 14, further comprising positioning the spatially varying spectral filter at an intermediary image plane before the interferometer.

16. A system comprising:

   a spectrometer comprising:

a detector positioned at an end of an optical path,

a set of optical components positioned along the optical path such that the set of optical components directs light of a scene to the detector, the set of optical components comprising an interferometer configured to create a set of interferograms,

a spatially varying spectral filter positioned along the optical path and configured to cause different regions of the detector to be exposed to different spectral bands of the light originating from the scene, and

a processor communicatively coupled to the detector and configured to process the set of interferograms as detected by the detector in a manner that extracts spectral information from the set of interferograms; and

a mounting interface configured to attach the spectrometer to a remote sensing platform.

17. The system of claim 16, wherein the remote sensing platform comprises a spaceborne platform.

18. The system of claim 17, wherein the spectrometer is configured for remote sensing of an atmosphere of Earth.

19. The system of one of claims 16 to 18, wherein the remote sensing platform comprises an airborne platform.

20. The system of claim 19, wherein the spectrometer is configured for remote sensing of a surface of Earth.

100

**FIG. 1A**

FIG. 1B

*FIG. 2A*

*FIG. 2B*

*FIG. 3*

400

**Radiance for Body at 293K or 20C**

**FIG. 4**

500

Ground Feature

3

2

1

0

**Successive Views offset for Clarity** ⟶

*FIG. 5*

600

610
| Couple a detector to circuitry |
|---|

620
| Assemble an interferometer in optical communication with the detector |
|---|

630
| Mount a spatially varying spectral filter in proximity to the detector and the interferometer |
|---|

640
| Arrange a set of optical components such that light from a scene passes through the interferometer and the filter before reaching the detector |
|---|

*FIG. 6*

Europäisches
Patentamt
European
Patent Office
Office européen
des brevets

# EUROPEAN SEARCH REPORT

**Application Number**

EP 25 22 3100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 124 839 A2 (OHB SE [DE]) 1 February 2023 (2023-02-01)<br><br>* paragraph [0022] - paragraph [0032] *<br>* figures 1-5 *<br>----- | 1,2, 5-13, 16-20 | INV.<br>G01J3/28<br>G01J3/36<br>G01J3/453 |
| X | CA 2 669 601 A1 (COM DEV INT LTD [CA]) 20 December 2009 (2009-12-20)<br>* paragraph [0040] - paragraph [0099] *<br>* figures 3-10 *<br>----- | 1-20 | |
| X | EP 2 839 255 B1 (RAYTHEON CO [US]) 5 July 2017 (2017-07-05)<br><br>* paragraphs [0002], [0003], [0006], [0020] - [0030] *<br>* figures 3-5 *<br>----- | 1,2, 5-13, 16-20 | |
| A | US 2008/123097 A1 (MUHAMMED HAMED HAMID [SE] ET AL) 29 May 2008 (2008-05-29)<br>* paragraphs [0092], [0127] - [0135] *<br>* figures 3, 21 *<br>----- | 3,4,14, 15 | **TECHNICAL FIELDS SEARCHED (IPC)**<br><br>G01J |
| A | DIVOKÃ MARTIN ET AL: "Simple two-dimensional-imaging spectrograph with wedged narrow band filters", REVIEW OF SCIENTIFIC INSTRUMENTS AMERICAN INSTITUTE OF PHYSICS, 2 HUNTINGTON QUADRANGLE, MELVILLE, NY 11747, vol. 79, no. 12, 29 December 2008 (2008-12-29), pages 123114-123114, XP012114952, ISSN: 0034-6748, DOI: 10.1063/1.3058603 [retrieved on 2008-12-29] * page 1 - page 2 *<br>----- | 3,4,14, 15 | |

The present search report has been drawn up for all claims

| Place of search | Date of completion of the search | Examiner |
|---|---|---|
| Munich | 13 May 2026 | Haller, Mirjam |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 25 22 3100

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2026

| Patent document cited in search report | | Publication date | Patent family member(s) | | Publication date |
|---|---|---|---|---|---|
| EP 4124839 | A2 | 01-02-2023 | DE | 102021119554 A1 | 02-02-2023 |
| | | | EP | 4124839 A2 | 01-02-2023 |
| CA 2669601 | A1 | 20-12-2009 | AT | E544055 T1 | 15-02-2012 |
| | | | CA | 2669601 A1 | 20-12-2009 |
| | | | EP | 2136191 A1 | 23-12-2009 |
| | | | US | 2009316159 A1 | 24-12-2009 |
| EP 2839255 | B1 | 05-07-2017 | EP | 2839255 A1 | 25-02-2015 |
| | | | EP | 3026407 A1 | 01-06-2016 |
| | | | US | 2013277560 A1 | 24-10-2013 |
| | | | WO | 2013158206 A1 | 24-10-2013 |
| US 2008123097 | A1 | 29-05-2008 | CA | 2594105 A1 | 04-05-2006 |
| | | | CN | 101124462 A | 13-02-2008 |
| | | | EP | 1817558 A1 | 15-08-2007 |
| | | | JP | 2008518229 A | 29-05-2008 |
| | | | US | 2008123097 A1 | 29-05-2008 |
| | | | WO | 2006046898 A1 | 04-05-2006 |
| | | | WO | 2006046913 A1 | 04-05-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63734354